# DEMANDE DE BREVET EUROPEEN

(11) **EP 3 208 317 A1**
(43) Date de publication de la demande: **23.08.2017**
(21) Numéro de dépôt: 17156385.1
(22) Date de dépôt: 16.02.2017
(51) Int. Cl.: C09D 11/04, C09D 11/30, C09D 11/38, D06P 1/32

(54) **FORMULATION D'ENCRE A BASE D'HEMOGLOBINES**

(30) Priorité: 16.02.2016 FR 1651219
(71) Demandeur: Doublet, 59710 Avelin (FR)
(72) Inventeur: DUMONT-MEUNIER, Ludivine, 62980 VERMELLES (FR)
(74) Mandataire: Cabinet Armengaud Aîné

(57) **Abrégé**

La présente invention vise une formulation permettant de former une encre de couleur primaire comprenant :
- 0,3-4,5% en poids de la formulation, d'hémoglobines actives,
- 0,15-5,5% en poids de la formulation, d'un substrat chromogène choisi parmi la 3-méthyl-2-benzothiazolinone (MBTH) et des dérivés de la phénylènediamine,
- 0,25-6,5% en poids de la formulation, d'un composé aromatique choisi parmi les chloronaphthols, les naphthalènediols, les aminophénols, les catéchols et les chlorophénols,
- 1,5-4,5% en poids de la formulation, d'un agent oxydant,
- 10-42,5% en poids de la formulation d'un co-solvant ou d'un mélange de co-solvants ,
- au moins 40% d'eau,
- 0-9,5% en poids de la formulation d'un agent de dispersion ou d'un mélange d'agents de dispersion, et.
éventuellement
- 5-25% en poids de la formulation d'un polymère soluble.

## Description

La présente invention concerne une formulation permettant de former une encre à base d'hémoglobines.

L'enjeu à ce jour dans le développement des encres de couleur est de mettre au point des encres plus écologiques et plus économiques que celles actuellement utilisées.

La technique d'impression basée sur l'utilisation d'enzymes a été décrite dans l'art antérieur. Le brevet EP 1 342 831 décrit un procédé de coloration de tissus par voie enzymatique, comprenant le trempage du tissu dans une solution aqueuse comprenant un ou plusieurs composés aromatiques ou hétéroaromatiques, suivi d'un 2^{ème} trempage dudit tissu déjà trempé dans une solution aqueuse avec une source de peroxyde d'hydrogène et une enzyme présentant une activité peroxydase, ou avec une enzyme présentant une activité oxydase sur ledit ou lesdits composés aromatiques ou hétéroaromatiques.

Dans ce procédé il n'existe aucun contrôle des éléments fixés au cours des différents trempages des échantillons, et tout particulièrement du catalyseur d'oxydation. Ce dernier n'est lié que par absorption et peut donc être éliminé au cours des lavages. De plus, les couleurs obtenues ne sont pas les couleurs primaires.

Le brevet EP 1 763 398 décrit une composition catalytique photoactivable pour la génération de couleurs sur un support. Ladite composition comprend un ou plusieurs catalyseurs d'oxydation inactivés, notamment d'hémoglobines inactivées.

Ce brevet décrit également un procédé en 3 étapes de génération de couleurs sur un support utilisant ladite composition, comprenant l'immobilisation par imprégnation de ladite composition catalytique photoactivable inactivée sur un support à colorer, une 2^{ème} imprégnation d'une solution comprenant les réactifs chromogènes et les oxydants sur ledit support déjà imprégné de ladite composition, et enfin une activation de ladite composition catalytique par stimulation lumineuse, permettant ainsi de développer les couleurs sur le support.

Ce procédé permet de faire apparaitre les couleurs à l'endroit souhaité. Cependant, étant donné que le colorant se forme *in-situ* à la surface du support par stimulation lumineuse et qu'il est impossible d'encapsuler préalablement les colorants ou les pigments, les phénomènes d'agrégation et de perte des couleurs avec le temps surviennent souvent et compromettent les résultats d'impression.

En plus, un procédé en trois étapes est relativement contraignant, notamment pour l'impression en jet d'encre.

Pour la mise en oeuvre de ce procédé en trois étapes pour une impression en jet d'encre, trois passages successifs des trois solutions différentes au même endroit sont obligatoires pour générer une couleur. Il est également nécessaire de développer un pilotage informatique bien particulier à partir des imprimantes actuellement commercialement disponibles. La mise en oeuvre du procédé décrit dans le brevet EP 1 763 398 peut donc s'avérer être compliqué.

Afin de résoudre le problème colorimétrique et d'apporter un confort d'impression, il est souhaitable de développer une encre écologique et économique dans lequel les colorants sont préalablement développés et stabilisés.

La présente invention a pour objet de proposer une formulation permettant de former une encre de couleur primaire écologique et stable.

La dite formulation comprend:
- des hémoglobines actives,
- un substrat chromogène choisi parmi la 3-méthyl-2-benzothiazolinone (MBTH) et des dérivés de la phénylènediamine,
- un composé aromatique choisi parmi les chloronaphthols, les naphthalènediols, les aminophénols, les catéchols et les chlorophénols,
- un agent oxydant,
- au moins un co-solvant,
- au moins 40% d'eau,
- éventuellement, un agent de dispersion ou un mélange d'agents de dispersion, et
- éventuellement un polymère soluble.

Plus particulièrement, ladite formulation comprend :
- 0,3-4,5% en poids de la formulation, d'hémoglobines actives,
- 0,15-5,5% en poids de la formulation, d'un substrat chromogène choisi parmi la 3-méthyl-2-benzothiazolinone (MBTH) et des dérivés de la phénylènediamine,
- 0,25-6,5% en poids de la formulation, d'un composé aromatique choisi parmi les chloronaphthols, les naphthalènediols, les aminophénols, les catéchols et les chlorophénols,
- 1,5-4,5% en poids de la formulation, d'un agent oxydant,
- 10-42,5% en poids de la formulation d'un co-solvant ou d'un mélange de co-solvants,
- au moins 40% d'eau,
- 0-9,5% en poids de la formulation d'un agent de dispersion ou d'un mélange d'agents de dispersion, et
   éventuellement
- 5-25% en poids de la formulation d'un polymère soluble.

Dans le cadre de la présente invention, les hémoglobines sont ajoutées dans la formulation en tant que catalyseur d'oxydation, notamment comme peroxydase. Conformément à l'invention, les hémoglobines utilisées sont des hémoglobines naturelles humaines ou animales, notamment des hémoglobines bovines, séparées du sang selon les méthodes conventionnelles, ou des hémoglobines obtenues par un procédé de bioingénierie connu dans l'art et ayant une séquence d'acides aminés identiques aux hémoglobines naturelles.

Par « hémoglobines activés », on entend les hémoglobines capables d'oxyder des substrats de la peroxydase.

Les hémoglobines utilisées dans l'invention sont des hémoglobines activées qui catalysent la réaction entre le substrat chromogène et le composé aromatique en présence d'un agent oxydant dans la formulation.

Par « substrat chromogène », on entend des composés fonctionnant en tant que substrat des hémoglobines et capables de conduire à un composé coloré après oxydation par un agent oxydant et condensation avec les composés aromatiques.

Conformément à la présente invention, ledit substrat chromogène est choisi parmi la 3-méthyl-2-benzothiazolinone (MBTH) et des dérivés de la phénylènediamine, comme la diméthyl phénylènediamine (DMPDA) et la 1,4-phénylènediamine (1,4-PD).

Par « composé aromatique », on entend des composés capables de réagir avec un substrat chromogène en présence d'un agent oxydant et d'hémoglobines en tant que catalyseur d'oxydation et de conduire à un composé coloré après oxydation par un agent oxydant et condensation avec un substrat aromatique.

Conformément à la présente invention, ledit composé aromatique est choisi parmi les chloronaphthols, les naphthalènediols, les aminophénols, les catéchols et les chlorophénols, notamment choisi parmi le 4-chlorophénol (4-CP), le 4-chloronaphthol (4-CN), le 1,3-naphthalènediol(1,3-ND).

En choisissant le couple adéquat de substrat chromogène et de composé aromatique, une formulation de l'invention peut produire les quatre couleurs primaires pour l'impression : le cyan, le magenta, le jaune et le noir.

Par exemple, la réaction entre le 4-chloronaphthol et la 3-méthyl-2-benzothiazolinone produit un composé de couleur rouge ; la réaction entre le 1,3-naphthalènediol et la 3-méthyl-2-benzothiazolinone produit un composé de couleur jaune ; la réaction entre le 4-chloronaphthol et la diméthyl phénylènediamine produit un composé de couleur bleue ; la réaction entre le 4-chlorophénol et la 1,4-phénylènediamine produit un composé de couleur noire.

On entend par « agent oxydant » un composé ou un ion qui peut accepter au moins un électron d'une autre espèce chimique lors d'une réaction d'oxydoréduction. Dans un mode de réalisation particulier, ledit agent oxydant est H₂O₂.

Conformément à l'invention, une formulation de l'invention contient un co-solvant choisi parmi le diéthylène glycol monobutyl éther (DEGMBE), le PEG200 et la N-méthylpyrrolidone.

On entend par « co-solvant » une substance ayant un rôle de solvant en association en quantité minoritaire avec un autre solvant. L'utilisation de co-solvant permet d'améliorer les propriétés solubilisantes du solvant principal.

La stabilité des colorants est une propriété essentielle d'une encre. En effet, il est important d'éviter l'apparition visuelle de petits agrégats dans l'encre pendant au moins une période de 2 mois après la préparation de l'encre.

La présente invention utilise des co-solvants miscibles à l'eau pour inhiber l'agrégation dans l'encre tout en conservant le rendu des couleurs dans le temps. En fonction des substrats chromogène employés, le choix des co-solvants peut être différent et l'homme du métier saura faire ce choix à la lumière de ses connaissances générales.

Un agent de dispersion peut être aussi ajouté dans une formulation de l'invention pour inhiber l'agrégation dans l'encre formée à partir de ladite formulation.

L'utilisation d'un agent de dispersion en plus d'un co-solvant dans une formulation de l'invention permet d'inhiber davantage la formation d'agrégat dans l'encre formée à partir de ladite formulation.

Dans le cadre de la présente invention, un agent de dispersion de type éther de gylcol a été utilisé.

La viscosité est une autre propriété essentielle pour une encre. En effet, selon l'utilisation à laquelle elle est destinée, une encre formée à partir d'une formulation de l'invention doit avoir une viscosité adaptée. Une trop faible viscosité conduit à une diffusion trop rapide de l'encre et par conséquent, à une perte de précision lors de l'impression. En revanche, une viscosité trop élevée peut engendrer un phénomène d'agrégation ou de gélification de l'encre.

Par exemple, l'impression en sérigraphie, technique pour laquelle l'encre passe au travers des mailles d'un écran en fibres synthétiques polyester, nécessite d'avoir une encre épaisse pour éviter un écoulement trop rapide au travers des mailles et de décrire ainsi des motifs précis.

Les encres pour l'impression en sérigraphie doivent avoir au minimum une viscosité de 2,2 Pa.s.

En revanche, une encre pour l'impression en jet d'encre doit être plus fluide et jetable à température ambiante. La viscosité générale requise pour les encres pour l'impression en jet d'encre est de 0,001 à 0,1 Pa.s.

La viscosité d'une encre formée à partir d'une formulation de l'invention peut être diminuée en ajoutant un agent de dispersion dans ladite formulation, alors que l'utilisation d'un polymère hydrosoluble dans une formulation de l'invention permet d'augmenter la viscosité de l'encre formée à partir de ladite formulation.

Conformément à la présente invention, l'utilisation d'un polymère hydrosoluble est notamment nécessaire dans une formulation pour former une encre pour l'impression en sérigraphie.

Conformément à l'invention, ledit polymère soluble dans une formulation de l'invention doit avoir une faible toxicité, une grande solubilité dans l'eau et une grande compatibilité avec les co-solvants présents dans ladite formulation.

Dans un mode de réalisation avantageux de l'invention, ledit polymère soluble est la polyvinylpyrrolidone (PVP) ou l'alcool polyvinylique (PAV).

Avantageusement, ledit polymère soluble est la polyvinylpyrolidone ayant une masse molaire d'au moins 3,6x10⁵.

Dans un mode de réalisation particulier, l'invention concerne une formulation permettant de former une encre pour l'impression en sérigraphie, ladite formulation comprenant :
- 0,3-3% en poids de la formulation d'hémoglobines actives,
- 0,15-1,7%, notamment 0,15-1%, en poids de la formulation d'un substrat chromogène choisi parmi la 3-méthyl-2-benzothiazolinone (MBTH), la diméthyl phénylènediamine et la 1,4-phénylènediamine
- 0,25-2 % en poids de la formulation d'un composé aromatique choisi parmi le 4- chlorophénol, le 4-chloronaphthol, et le 1,3-naphthalènediol,
- 1,5-3 % en poids de la formulation de H₂O₂,
- 10-30 % en poids de la formulation d'un co-solvant choisi parmi le diéthylène glycol monobutyl éther (DEGMBE), le PEG200 et la N-méthylpyrrolidone, ou d'un mélange de ceux-ci,
- au moins 45% de l'eau, et
- 5-25% en poids de la formulation de polyvinylpyrrolidone ou d'alcool polyvinylique, et
- 0-5% en poids de la formulation d'un agent de dispersion ou d'un mélange d'agents de dispersion.

Selon un mode de réalisation plus particulier de l'invention, une formulation permettant de former une encre de couleur rouge pour l'impression en sérigraphie comprend :
- 2-2,5%, notamment 2,25%, en poids de la formulation d'hémoglobines actives,
- 0,5-0,8%, notamment 0,68%, en poids de la formulation de 3-méthyl-2-benzothiazolinone (MBTH),
- 0,4-0,7 %, notamment 0,56%, en poids de la formulation de 4-chloronaphthol,
- 2-2,5 %, notamment 2,25%, en poids de la formulation de H₂O₂,
- 25-30 %, notamment 27%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 45%, notamment 48% en poids de la formulation d'eau, et
- 18-23%, notamment 21,25% en poids de la formulation de polyvinylpyrrolidone, et
- 0-5%, notamment 0%, en poids de la formulation d'un agent de dispersion ou d'un mélange d'agents de dispersion.

Selon un autre mode de réalisation plus particulier de de l'invention, une formulation permettant de former une encre de couleur jaune pour l'impression en sérigraphie comprend :
- 1,85-2,35%, notamment 2,1%, en poids de la formulation d'hémoglobines actives,
- 0,3-0,5%, notamment 0,39%, en poids de la formulation de 3-méthyl-2-benzothiazolinone (MBTH),
- 0,2-0,4%, notamment 0,29%, en poids de la formulation de 1,3-naphthalènediol,
- 1,85-2,35%, notamment 2,1%, en poids de la formulation de H₂O₂,
- 12 à 17 %, notamment 14,6%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 55%, notamment 60% en poids de la formulation de l'eau, et
- 20-25%, notamment 22% en poids de la formulation de polyvinylpyrrolidone, et
- 0-5%, notamment 0%, en poids de la formulation d'un agent de dispersion ou d'un mélange d'agents de dispersion.

Selon encore un autre mode de réalisation plus particulier de l'invention, une formulation permettant de former une encre de couleur bleue pour l'impression en sérigraphie comprend :
- 0,45-0,55%, notamment 0,5%, en poids de la formulation d'hémoglobines actives,
- 0,15-0,21%, notamment 0,18%, en poids de la formulation de diméthyl phénylènediamine,
- 0,45-0,65%, notamment 0,54%, en poids de la formulation de 4-chloronaphthol,
- 1,7-2,1 %, notamment 1,9%, en poids de la formulation de H₂O₂,
- 15-20%, notamment 18%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 55%, notamment 58,9% en poids de la formulation d'eau, et
- 17,5-22,5%, notamment 20%, en poids de la formulation de polyvinylpyrrolidone, et
- 0-5%, notamment 0%, en poids de la formulation d'un agent de dispersion ou d'un mélange d'agents de dispersion.

Selon encore un autre mode de réalisation plus particulier de l'invention, une formulation permettant de former une encre de couleur noire pour l'impression en sérigraphie comprend :
- 2,5-3 %, notamment 2,75% en poids de la formulation d'hémoglobines actives,
- 1,2-1,7%, notamment 1,43%, en poids de la formulation de 1,4-phénylènediamine
- 1,5-2 %, notamment 1,76%, en poids de la formulation de 4-chlorophénol,
- 2,5-3 %, notamment 2,75%, en poids de la formulation de H₂O₂,
- 14-19 %, notamment 16,5%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 60%, notamment 65,2% en poids de la formulation d'eau, et
- 5-7%, notamment 6,32% en poids de la formulation d'alcool polyvinylique, et
- 0-5% en poids, notamment 3,3%, en poids de la formulation d'un agent de dispersion ou d'un mélange d'agents de dispersion.

Plus particulièrement, la présente invention porte sur quatre formulations spécifiques illustrées dans le tableau 1 ci-après, permettant de former respectivement une encre pour l'impression en sérigraphie de couleur rouge, une encre pour l'impression en sérigraphie de couleur jaune, une encre pour l'impression en sérigraphie de couleur bleue, et une encore pour l'impression en sérigraphie de couleur noire.

**Tableau 1**

| % de poids de la formulation | Formulation Encre rouge | Formulation Encre jaune | Formulation Encre bleue | Formulation Encre noire |
|---|---|---|---|---|
| 4-CP | | | | 1,76 |
| 1,3-ND% | | 0,29 | | |
| 4-CN% | 0,56 | | 0,54 | |
| BMTH | 0,68 | 0,39 | | |
| DMPDA | | | 0,18 | |
| 1,4-PD | | | | 1,43 |
| H2O2 | 2,25 | 2,1 | 1,9 | 2,75 |
| Enzymes | 2,25 | 2,1 | 0,5 | 2,75 |
| polymère | 21,25 (PVP) | 22 (PVP) | 20 (PVP) | 6,32 (PVA) |
| DEGMBE (co-solvant) | 12,5 | 14,6 | | 16,5 |
| NMP (co-solvant) | 2 | | | |
| PEG200 (co-solvant) | 12,5 | | 18 | |
| Dynol 604 (agent d'ajustement de tension superficielle) | | | | |
| Additol 6387 (agent de dispersion) | | | | 3,3 |
| Eau | 48 | 60 | 58,9 | 65,2 |

La présente invention a également pour objet les encres pour l'impression en sérigraphie obtenues à partir d'une formulation décrite ci-dessus.

La présente invention concerne également une méthode de préparation d'une encre pour l'impression en sérigraphie obtenue à partir d'une formulation décrite ci-dessus.

Ladite méthode comprend les étapes suivantes :
- préparer une solution aqueuse comprenant un substrat chromogène, un composé aromatique, au moins un co-solvant, un agent oxydant, des hémogobines actives, et éventuellement au moins un agent de dispersion,
- agiter ladite solution aqueuse jusqu'à la formation du colorant,
- ajouter dans ladite solution au dernier moment un polymère soluble.

Cette méthode permet d'obtenir des encres pour l'impression en sérigraphie avec des viscosités convenables, notamment de 2,8 à 3,6 Pa.s, après 15 jours de préparation. Ces mêmes encres après 3 mois de préparation restent stables.

Un autre mode de réalisation particulier de l'invention concerne une formulation permettant de former une encre pour l'impression en jet d'encre, ladite formulation comprenant :
- 0,5-4,5 % en poids de la formulation d'hémoglobines actives,
- 0,25-5,5% en poids de la formulation d'un substrat chromogène choisi parmi la 3-méthyl-2-benzothiazolinone, la diméthyl phénylènediamine et la 1,4-phénylènediamine
- 0,25-6,5% en poids de la formulation d'un composé aromatique choisi parmi le 4- chlorophénol, le 4-chloronaphthol, et le 1,3-naphthalènediol,
- 1,5-4,5 % en poids de la formulation de H₂O₂,
- 20 - 42,5 % en poids de la formulation d'un co-solvant choisi parmi le diéthylène glycol monobutyl éther (DEGMBE), le PEG200 et la N-méthylpyrrolidone, ou d'un mélange de ceux-ci,
- au moins 40% en poids de la formulation d'eau, et
- 0,5-9,5 % en poids de la formulation d'un agent de dispersion ou d'un mélange d'agents de dispersion.

Selon un mode de réalisation plus particulier de l'invention, une formulation permettant de former une encre de couleur rouge pour l'impression en jet d'encre, comprend :
- 4,1-4,5 %, notamment 4,33%, en poids de la formulation d'hémoglobines actives,
- 1,7-2%, notamment 1,86%, en poids de la formulation de 3-méthyl-2-benzothiazolinone,
- 1,4-1,7%, notamment 1,56%, en poids de la formulation de 4-chloronaphthol,
- 4,1-4,5 %, notamment 4,33%, en poids de la formulation de H₂O₂,
- 35 - 42,5 %, notamment 39,83%, en poids de la formulation d'un co-solvant choisi parmi le diéthylène glycol monobutyl éther (DEGMBE), le PEG200 et la N-méthylpyrrolidone, ou d'un mélange entre eux,
- au moins 40%, notamment 43,3% en poids de la formulation de l'eau, et
- 3,5-6 %, notamment 4,6% en poids de la formulation d'un agent de dispersion ou d'un mélange d'agents de dispersion.

Selon un autre mode de réalisation plus particulier de l'invention, une formulation permettant de former une encre de couleur jaune pour l'impression en jet d'encre, comprend :
- 3,4-3,9%, notamment 3,65%, en poids de la formulation d'hémoglobines actives,
- 0,4-0,6%, notamment 0,49%, en poids de la formulation de 3-méthyl-2-benzothiazolinone,
- 0,27-0,47%, notamment 0,37%, en poids de la formulation de 1,3-naphthalènediol,
- 1,85-2,35 %, notamment 2,1%, en poids de la formulation de H₂O₂,
- 20 - 30 %, notamment 26%, en poids de la formulation d'un co-solvant choisi parmi le diéthylène glycol monobutyl éther (DEGMBE), le PEG200 et la N-méthylpyrrolidone, ou d'un mélange de ceuxci,
- au moins 40% en poids de la formulation de l'eau, et
- 0,5-3,5%, notamment 2%, en poids de la formulation d'un agent de dispersion ou d'un mélange d'agents de dispersion.

Selon encore un autre mode de réalisation plus particulier de l'invention, une formulation permettant de former une encre de couleur bleue pour l'impression en jet d'encre, comprend :
- 0,75-1,05 %, notamment 0,9%, en poids de la formulation d'hémoglobines actives,
- 0,25-0,3%, notamment 0,27%, en poids de la formulation de diméthyl phénylènediamine,
- 0,7-1%, notamment 0,83%, en poids de la formulation de 4-chloronaphthol,
- 1,6-2 %, notamment 1,8%, en poids de la formulation de H₂O₂,
- 30 - 40%, notamment 36,4%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 45%, notamment 52,54%, en poids de la formulation d'eau, et
- 5-9%, notamment 7%, en poids de la formulation d'un agent de dispersion ou d'un mélange d'agents de dispersion.

Selon encore un autre mode de réalisation plus particulier de l'invention, une formulation permettant de former une encre de couleur noire pour l'impression en jet d'encre, comprend :
- 2,7-3,2 %, notamment 2,96%, en poids de la formulation d'hémoglobines actives,
- 4,7-5,5%, notamment 5,12%, en poids de la formulation de 1,4-phénylènediamine,
- 5,7-6,5%, notamment 6,09%, en poids de la formulation de 4-chlorophénol,
- 2,7-3,2 %, notamment 2,96%, en poids de la formulation de H₂O₂,
- 25 - 35 %, notamment 29,58%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 40%, notamment 44,38%, en poids de la formulation d'eau, et
- 8,5-9,5 %, notamment 8,87%, en poids de la formulation d'un agent de dispersion ou d'un mélange d'agents de dispersion.

Plus particulièrement, la présente invention porte sur quatre formulations spécifiques illustrées dans le tableau 2 ci-après, permettant de former respectivement une encre pour l'impression en jet d'encre de couleur rouge, une encre pour l'impression en jet d'encre de couleur jaune, une encre pour l'impression en jet d'encre de couleur bleue, et une encore de couleur noire.

**Tableau 2**

| % de poids de la formulation | Formulation Encre rouge | Formulation Encre jaune | Formulation Encre bleue | Formulation Encre noire |
|---|---|---|---|---|
| 4-CP | | | | 6,09 |
| 1,3-ND% | | 0,37 | | |
| 4-CN% | 1,56 | | 0,83 | |
| BMTH | 1,86 | 0,49 | | |
| DMPDA | | | 0,27 | |
| 1,4-PD | | | | 5,12 |
| H₂O₂ | 4,33 | 2,1 | 1,8 | 2,96 |
| Enzymes | 4,33 | 3,65 | 0,9 | 2,96 |
| DEGMBE (co-solvant) | 35,5 | 26 | 36,4 | 29,58 |
| NMP (co-solvant) | 4,33 | | | |
| PEG200 (co-solvant) | | | | |
| Dynol 604 (agent de dispersion) | 1,2 | 1 | 2 | |
| Additol 6387 (agent de dispersion) | 3,4 | 1 | 5 | 8,87 |
| Eau | 43,3 | 65,44 | 52,54 | 44,38 |

La présente invention a également pour objet les encres pour l'impression en jet d'encre obtenues à partir d'une formulation décrite ci-dessus.

Un autre aspect de l'invention a pour objet un procédé d'impression en une seule étape utilisant une encre obtenue à partir d'une formulation de l'invention, ledit procédé comprenant les étapes suivantes :
- imprimer des tissus à l'aide d'une encre obtenue à partir d'une formulation de l'invention,
- sécher lesdits tissus imprimés par traitement thermique à une température de 60°C à 100°C ou par radiation UV.

Un séchage à une température relativement basse devient possible, grâce à l'utilisation d'une encore obtenue à partir d'une formulation de l'invention.

La présente invention est illustrée plus en détail par les exemples ci-après.

### Exemples :

### Matériels et méthodes

### 1. Mesure de la viscosité

Les mesures de viscosité sont faites après chaque préparation de formulation, puis après 15 jours, et 1 mois et demie après la préparation de formulation. L'échantillon de chaque encre est analysé dans un viscosimètre à 20 °C et 60% d'humidité. Chaque mesure est répétée 3 fois. Les résultats sont présentés sous forme de plage de valeur.

### 2. Mesure de la tension superficielle

La mesure de tension superficielle d'un liquide est réalisée en utilisant un tensiomètre. Le tensiomètre utilise la méthode de Wilhelmy qui repose sur la mesure de la force de mouillage du liquide étudié s'exerçant sur un objet connu. L'objet connu est une lame de platine. La relation mathématique *F* = *p γL cosθ* est utilisée, avec p le périmètre de la lame de platine, yL la tension superficielle recherchée et θ l'angle formé lorsque la lame est en contact avec le liquide. Celui-ci étant considéré comme totalement mouillant avec la lame de platine, alors θ = 0, ce qui simplifie l'équation. Chaque mesure est faite 4 fois et la lame de platine est systématiquement re-nettoyée entre chaque mesure.

### 3. Test de l'impression en jet d'encre

### 3.1. Encre noire

Les tests de l'impression en jet d'encre à l'encre noire ont été effectués à l'aide de l'imprimante Dimatix. Les impressions ont été faites avec une résolution de 850 dpi. L'éjection de ces encres se fait avec un module à température ambiante. L'impression est effectuée sur des supports polyester de 100 à 400 g/m², des papiers classiques et les bâches PVC, en 2 passages unidirectionnels.

### 3.2. Encre bleue

Les impressions ont été faites avec une résolution de 760 dpi. Des impressions sur papier photo et tissus Eco-fixe ont été réalisées.

L'encre bleue a été éjectée avec module à température ambiante. Les buses ont des tensions allant de 15 à 17 V. Après impression certains tissus ont subi un séchage à 100°C. L'impression est effectuée sur des supports polyester de 100 à 400 g/m², des papiers classiques et les bâches PVC, en 2 passages unidirectionnels.

### 3.3. Encre jaune

Les impressions ont été faites avec une résolution de 850 dpi. L'éjection de ces encres se fait avec un module à température ambiante. Les buses ont des tensions allant de 13 à 16 V. L'impression est effectuée sur des supports polyester de 100 à 400 g/m², des papiers classiques et les bâches PVC, en 2 passages unidirectionnels.

### 3.4. Encre rouge

Les impressions ont été faites avec une résolution de 850 dpi. L'éjection de ces encres se fait avec un module à température ambiante. Les buses ont des tensions allant de 15 à 17 V. L'impression est effectuée sur des supports polyester de 100 à 400 g/m², des papiers classiques et les bâches PVC, en 2 passages unidirectionnels.

### 4. Test colorimétrique

Les mesures de couleurs ont été faites après impression et séchage. Chaque couleur est mesurée 3 fois. L'appareil utilisé est un Spectrophotomètre Datacolor 650.

### Résultats

### 1. Encre pour l'impression en sérigraphie

Quatre encres pour l'impression en sérigraphie sont respectivement obtenues selon la méthode décrite dans la présente invention à partir de quatre formulations illustrées dans le tableau 1.

On a mesuré les viscosités respectives de l'encre rouge, jaune et bleue après 15 jours et 3 mois de préparation et la viscosité de l'encre noire après 1 mois et demi de préparation (tableau 3).

**Tableau 3**

| | Encre rouge | Encre jaune | Encre bleue | Encre noire |
|---|---|---|---|---|
| Viscosité (Pa.s) (15 jours) | 3,55-1,57 | 3,24-1,35 | 3,6-1,3 | |
| Viscosité (Pa.s) (1 mois et demi) | | | | 4,21-1,45 |
| Viscosité (Pa.s) (3 mois) | 4-1,67 | 4,18-1,41 | 4,14-1,34 | |

Les quatre encres respectent tous la gamme de viscosité souhaitée (≥2,2 Pa.s) et sont relativement stables dans le temps.

### 2. Encre pour l'impression en jet d'encre

Quatre encres pour l'impression en jet d'encre sont obtenues à partir de quatre formulations illustrées dans le tableau 2.

On a mesuré la viscosité moyenne de l'encre noire, rouge, bleue et jaune et la tension superficielle de l'encre noire, rouge et bleue (tableau 4).

**Tableau 4**

| | noire | bleue | Rouge | Jaune |
|---|---|---|---|---|
| Viscosité(Pa.s) | 8,36x10⁻³ | 4,95x10⁻³ | 5,73x10⁻³ | 2,5x10⁻³ |
| Tension superficielle (mN/m) | 26,3 | | 28,8 | 27,3 |

Les conditions générales requises pour une encre de l'impression en jet d'encre sont une viscosité de 0,001 à 0,1 Pa.s et une tension superficielle de 26 à 40 mNm⁻¹.

Ces quatre encres testées respectent tous la viscosité et la tension superficielle requises pour une encre pour l'impression en jet d'encre.

Ces tests de l'impression confirment que les encres du tableau 2 peuvent être utilisées par une imprimante en jet d'encre pour mettre en oeuvre une impression en jet d'encre.

Les résultats de test colorimétrique sont illustrés dans le tableau 5 ci-après.

**Tableau 5**

| | Noire | Bleue | Jaune | Rouge |
|---|---|---|---|---|
| Référence | L*=31,35 | L*=41,34 | L*=85,5 | L*=49,77 |
| | a*=0,92 | a*=1,34 | a*=1,5 | a*=62,80 |
| | b*=-6,45 | b*=-36,64 | b*=78,80 | b*=9,17 |
| Encre de l'invention | L*=41,79 | L*=66,74 | L*=84,11 | L*=76,02 |
| | a*=3,43 | a*=6,35 | a*=7,75 | a*=26,15 |
| | b*=-7,55 | b*=-21,84 | b*=9,71 | b*=1,00 |

## Revendications

1. Formulation permettant de former une encre de couleur primaire comprenant :
- 0,3-4,5% en poids de la formulation, d'hémoglobines actives,
- 0,15-5,5% en poids de la formulation, d'un substrat chromogène choisi parmi la 3-méthyl-2-benzothiazolinone (MBTH) et des dérivés de la phénylènediamine,
- 0,25-6,5% en poids de la formulation, d'un composé aromatique choisi parmi les chloronaphthols, les naphthalènediols, les aminophénols, les catéchols et les chlorophénols,
- 1,5-4,5% en poids de la formulation, d'un agent oxydant,
- 10-42,5% en poids de la formulation d'un co-solvant ou d'un mélange de co-solvants,
- au moins 40% d'eau,
- 0-9,5% en poids de la formulation d'un agent de dispersion ou d'un mélange d'agents de dispersion, et.
éventuellement
- 5-25% en poids de la formulation d'un polymère soluble.

2. Formulation selon la revendication 1, dans laquelle :
- ledit substrat chromogène est choisi parmi la 3-méthyl-2-benzothiazolinone (MBTH), la diméthyl phénylènediamine (DMPDA) et la 1,4-phénylènediamine (1,4-PD) ;
- dans laquelle ledit composé aromatique est choisi parmi le 4- chlorophénol (4-CP), le 4-chloronaphthol (4-CN), le 1,3-naphthalènediol(1,3-ND).

3. Formulation selon la revendication 1 ou 2, dans laquelle un co-solvant est choisi parmi le diéthylène glycol monobutyl éther (DEGMBE), le PEG200 et la N-méthylpyrrolidone.

4. Formulation selon l'une quelconque des revendications 1 à 3, dans laquelle le polymère soluble est la polyvinylpyrrolidone ou l'alcool polyvinylique.

5. Formulation selon l'une quelconque des revendications 1 à 4 permettant de former une encre pour l'impression en sérigraphie comprenant :
- 0,3-3% en poids de la formulation d'hémoglobines actives,
- 0,15-1,7%, notamment 0,15-1%, en poids de la formulation d'un substrat chromogène choisi parmi la 3-méthyl-2-benzothiazolinone (MBTH), la diméthyl phénylènediamine et la 1,4-phénylènediamine
- 0,25-2 % en poids de la formulation d'un composé aromatique choisi parmi le 4- chlorophénol, le 4-chloronaphthol, et le 1,3-naphthalènediol,
- 1,5-3 % en poids de la formulation de H₂O₂,
- 10-30 % en poids de la formulation d'un co-solvant choisi parmi le diéthylène glycol monobutyl éther (DEGMBE), le PEG200 et la N-méthylpyrrolidone, ou d'un mélange de ceux-ci,
- au moins 45% de l'eau, et
- 5-25% en poids de la formulation de polyvinylpyrrolidone ou d'alcool polyvinylique, et
- 0-5% en poids de la formulation d'un agent de dispersion ou d'un mélange d'agents de dispersion.

6. Formulation selon la revendication 5 permettant de former une encre de couleur rouge comprenant :
- 2-2,5%, notamment 2,25%, en poids de la formulation d'hémoglobines actives,
- 0,5-0,8%, notamment 0,68%, en poids de la formulation de 3-méthyl-2-benzothiazolinone (MBTH),
- 0,4-0,7 %, notamment 0,56%, en poids de la formulation de 4-chloronaphthol,
- 2-2,5 %, notamment 2,25%, en poids de la formulation de H₂O₂,
- 25-30 %, notamment 27%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 45%, notamment 48% en poids de la formulation d'eau, et
- 18-23%, notamment 21,25% en poids de la formulation de polyvinylpyrrolidone, et
- 0-5%, notamment 0%, en poids de la formulation d'un agent de dispersion ou d'un mélange d'agents de dispersion.

7. Formulation selon la revendication 5 permettant de former une encre de couleur jaune comprenant :
- 1,85-2,35%, notamment 2,1%, en poids de la formulation d'hémoglobines actives,
- 0,3-0,5%, notamment 0,39%, en poids de la formulation de 3-méthyl-2-benzothiazolinone (MBTH),
- 0,2-0,4%, notamment 0,29%, en poids de la formulation de 1,3-naphthalènediol,
- 1,85-2,35%, notamment 2,1%, en poids de la formulation de H₂O₂,
- 12 à 17 %, notamment 14,6%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 55%, notamment 60% en poids de la formulation de l'eau, et
- 20-25%, notamment 22% en poids de la formulation de polyvinylpyrrolidone, et
- 0-5%, notamment 0%, en poids de la formulation d'un agent de dispersion ou d'un mélange d'agents de dispersion.

8. Formulation selon la revendication 5 permettant de former une encre de couleur bleue comprenant :
- 0,45-0,55%, notamment 0,5%, en poids de la formulation d'hémoglobines actives,
- 0,15-0,21%, notamment 0,18%, en poids de la formulation de diméthyl phénylènediamine,
- 0,45-0,65%, notamment 0,54%, en poids de la formulation de 4-chloronaphthol,
- 1,7-2,1 %, notamment 1,9%, en poids de la formulation de H₂O₂,
- 15-20%, notamment 18%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 55%, notamment 58,9% en poids de la formulation d'eau, et
- 17,5-22,5%, notamment 20%, en poids de la formulation de polyvinylpyrrolidone, et
- 0-5%, notamment 0%, en poids de la formulation d'un agent de dispersion ou d'un mélange d'agents de dispersion.

9. Formulation selon la revendication 5 permettant de former une encre de couleur noire comprenant :
- 2,5-3 %, notamment 2,75% en poids de la formulation d'hémoglobines actives,
- 1,2-1,7%, notamment 1,43%, en poids de la formulation de 1,4-phénylènediamine
- 1,5-2 %, notamment 1,76%, en poids de la formulation de 4- chlorophénol,
- 2,5-3 %, notamment 2,75%, en poids de la formulation de H₂O₂,
- 14-19 %, notamment 16,5%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 60%, notamment 65,2% en poids de la formulation d'eau, et
- 5-7%, notamment 6,32% en poids de la formulation d'alcool polyvinylique, et
- 0-5% en poids, notamment 3,3%, en poids de la formulation d'un agent de dispersion ou d'un mélange d'agents de dispersion.

10. Encre pour l'impression en sérigraphie obtenue à partir de la formulation telle que décrite dans l'une quelconque des revendications 5 à 9.

11. Méthode de préparation d'une encre telle que définie dans la revendication 10, à partir d'une formulation telle que décrite dans l'une quelconque des revendications 5 à 9, comprenant :
- préparer une solution aqueuse comprenant un substrat chromogène, un composé aromatique, au moins un co-solvant, un agent oxydant, d'hémogobines actives, et éventuellement au moins un agent de dispersion,
- agiter ladite solution aqueuse jusqu'à la formation du colorant,
- ajouter dans ladite solution au dernier moment un polymère soluble.

12. Formulation selon l'une quelconque des revendications 1 à 4 permettant de former une encre pour l'impression en jet d'encre, comprenant :
- 0,5-4,5 % en poids de la formulation d'hémoglobines actives,
- 0,25-5,5% en poids de la formulation d'un substrat chromogène choisi parmi la 3-méthyl-2-benzothiazolinone, la diméthyl phénylènediamine et la 1,4-phénylènediamine
- 0,25-6,5% en poids de la formulation d'un composé aromatique choisi parmi le 4- chlorophénol, le 4-chloronaphthol, et le 1,3-naphthalènediol,
- 1,5-4,5 % en poids de la formulation de H₂O₂,
- 20 - 42,5 % en poids de la formulation d'un co-solvant choisi parmi le diéthylène glycol monobutyl éther (DEGMBE), le PEG200 et la N-méthylpyrrolidone, ou d'un mélange de ceux-ci,
- au moins 40% en poids de la formulation d'eau, et
- 0,5-9,5 % en poids de la formulation d'un agent de dispersion ou d'un mélange d'agents de dispersion.

13. Formulation selon la revendication 12 permettant de former une encre de couleur rouge comprenant :
- 4,1-4,5 %, notamment 4,33%, en poids de la formulation d'hémoglobines actives,
- 1,7-2%, notamment 1,86%, en poids de la formulation de 3-méthyl-2-benzothiazolinone,
- 1,4-1,7%, notemmant 1,56%, en poids de la formulation de 4-chloronaphthol,
- 4,1-4,5 %, notamment 4,33%, en poids de la formulation de H₂O₂,
- 35 - 42,5 %, notamment 39,83%, en poids de la formulation d'un co-solvant choisi parmi le diéthylène glycol monobutyl éther (DEGMBE), le PEG200 et la N-méthylpyrrolidone, ou d'un mélange entre eux,
- au moins 40%, notamment 43,3% en poids de la formulation de l'eau, et
- 3,5-6 %, notamment 4,6% en poids de la formulation d'un agent de dispersion ou d'un mélange d'agents de dispersion.

14. Formulation selon la revendication 12 permettant de former une encre de couleur jaune comprenant :
- 3,4-3,9%, notamment 3,65%, en poids de la formulation d'hémoglobines actives,
- 0,4-0,6%, notamment 0,49%, en poids de la formulation de 3-méthyl-2-benzothiazolinone,
- 0,27-0,47%, notamment 0,37%, en poids de la formulation de 1,3-naphthalènediol,
- 1,85-2,35 %, notamment 2,1%, en poids de la formulation de H₂O₂,
- 20 - 30 %, notamment 26%, en poids de la formulation d'un co-solvant choisi parmi le diéthylène glycol monobutyl éther (DEGMBE), le PEG200 et la N-méthylpyrrolidone, ou d'un mélange de ceuxci,
- au moins 40% en poids de la formulation de l'eau, et
- 0,5-3,5%, notamment 2%, en poids de la formulation d'un agent de dispersion ou d'un mélange d'agents de dispersion.

15. Formulation selon la revendication 12 permettant de former une encre de couleur bleue comprenant :
- 0,75-1,05 %, notamment 0,9%, en poids de la formulation d'hémoglobines actives,
- 0,25-0,3%, notamment 0,27%, en poids de la formulation de diméthyl phénylènediamine,
- 0,7-1%, notamment 0,83%, en poids de la formulation de 4-chloronaphthol,
- 1,6-2 %, notamment 1,8%, en poids de la formulation de H₂O₂,
- 30 - 40%, notamment 36,4%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 45%, notamment 52,54%, en poids de la formulation d'eau, et
- 5-9%, notamment 7%, en poids de la formulation d'un agent de dispersion ou d'un mélange d'agents de dispersion.

16. Formulation selon la revendication 12 permettant de former une encre de couleur noire comprenant :
- 2,7-3,2 %, notamment 2,96%, en poids de la formulation d'hémoglobines actives,
- 4,7-5,5%, notamment 5,12%, en poids de la formulation de 1,4-phénylènediamine,
- 5,7-6,5%, notamment 6,09%, en poids de la formulation de 4- chlorophénol,
- 2,7-3,2 %, notamment 2,96%, en poids de la formulation de H₂O₂,
- 25 - 35 %, notamment 29,58%, en poids de la formulation d'un co-solvant choisi parmi le diéthylène glycol monobutyl éther (DEGMBE), le PEG200 et la N-méthylpyrrolidone, ou d'un mélange de ceux-ci,
- au moins 40%, notamment 44,38%, en poids de la formulation d'eau, et
- 8,5-9,5 %, notamment 8,87%, en poids de la formulation d'un agent de dispersion ou d'un mélange d'agents de dispersion.

17. Encre à l'impression de jet d'encre obtenue à partir de la formulation selon l'une quelconque des revendications 12-16.

18. Procédé d'impression en une seule étape utilisant une encre obtenue selon l'une quelconque des revendications 1-9 et 12-16, dans lequel le séchage de tissu après l'impression est effectué par traitement thermique de 60°C à 100°C ou par radiation UV.
